# DEMANDE DE BREVET EUROPEEN

(11) **EP 1 806 299 A1**
(43) Date de publication de la demande: **11.07.2007**
(21) Numéro de dépôt: 06292030.1
(22) Date de dépôt: 22.12.2006
(51) Int. Cl.: B65D 90/34, B60P 3/22

(54) **Citerne comprenant un évent de mise à l'air obturable**

(30) Priorité: 04.01.2006 FR 0650034
(71) Demandeur: Etablissements MAGYAR, 21000 Dijon (FR)
(72) Inventeur: Magyar, Georges, 21000 Dijon (FR)
(74) Mandataire: Breese Derambure Majerowicz

(57) **Abrégé**

L'invention concerne une citerne métallique comprenant une cuve (2) et au moins un évent de mise à l'air (6) du contenu de ladite cuve, ledit évent mettant en communication l'intérieur et l'extérieur de la cuve (2), ladite citerne comprenant un élément d'obturation (9) apte à flotter sur le produit transporté dans la cuve (2), ledit élément d'obturation étant déplaçable par ledit produit entre une position de mise à l'air dans laquelle l'élément d'obturation (9) est éloigné de l'évent (6) de sorte à permettre la communication entre l'intérieur et l'extérieur de la cuve (2) lorsque le niveau du produit transporté par la cuve est inférieur à un niveau prédéterminé et une position d'obturation dans laquelle l'élément d'obturation (9) obture l'évent (6) de sorte à empêcher la communication entre l'intérieur et l'extérieur de la cuve (2) lorsque le produit dépasse ledit niveau prédéterminé.

## Description

L'invention concerne une citerne métallique destinée au transport de produits liquides ou semi-liquides, tels que du lait.

Il est connu de remplir de telles citernes par le bas de celles-ci afin d'éviter des opérations fastidieuses de remplissage par le haut. Dans ce cas, la citerne est pourvue d'un trou d'homme dans la partie supérieure de la citerne.

Il est également connu de prévoir un évent de mise à l'air dans le couvercle de trou d'homme. Cet évent permet de ne plus avoir à monter sur la citerne pour les opérations de dépotage et de nettoyage après vidange.

Cependant, un tel évent met en communication le contenu de la citerne avec l'extérieur et lorsque la citerne est pleine, le contenu peut déborder en cas de coup de frein ou d'une conduite brusque. Il en résulte une perte de contenu de la citerne.

L'invention vise à palier cet inconvénient en proposant une citerne comprenant un élément d'obturation mobile entre une position d'obturation de l'évent de mise à l'air lorsque le contenu de la citerne est sur le point de déborder de celle-ci et une position de mise à l'air lorsque le contenu de la citerne reste inférieur à un certain niveau.

A cet effet, l'invention concerne une citerne métallique destinée au transport de produits liquides ou semi-liquides, ladite citerne comprenant une cuve et au moins un évent de mise à l'air du contenu de ladite cuve, ledit évent étant disposé dans la partie supérieure de ladite cuve et mettant en communication l'intérieur et l'extérieur de la cuve, ladite citerne comprenant un élément d'obturation apte à flotter sur le produit transporté dans la cuve, ledit élément d'obturation étant déplaçable par ledit produit entre une position de mise à l'air dans laquelle l'élément d'obturation est éloigné de l'évent de sorte à permettre la communication entre l'intérieur et l'extérieur de la cuve lorsque le niveau du produit transporté par la cuve est inférieur à un niveau prédéterminé et une position d'obturation dans laquelle l'élément d'obturation obture l'évent de sorte à empêcher la communication entre l'intérieur et l'extérieur de la cuve lorsque le produit transporté dépasse ledit niveau prédéterminé.

Selon une réalisation, la citerne comprend un logement s'étendant à partir de l'évent vers l'intérieur de la cuve, ledit logement étant agencé pour que le produit transporté par la cuve puisse le traverser, l'élément d'obturation étant retenu dans ledit logement et étant déplaçable entre sa position de mise à l'air et sa position d'obturation à l'intérieur dudit logement.

D'autres aspects et avantages de l'invention apparaîtront au cours de la description qui suit faite en références aux figures annexées.

La figure 1 est une représentation schématique partielle en coupe d'une citerne selon l'invention, l'élément d'obturation étant en position de mise à l'air.

La figure 2 est une représentation schématique partielle en coupe de la citerne de la figure 1, l'élément d'obturation étant en position d'obturation.

En référence aux figures, on décrit une citerne métallique 1 comprenant une cuve 2 destinée à contenir un produit liquide ou semi-liquide tel que du lait. Pour des raisons de simplicité, seule une partie de la paroi supérieure 3 de la cuve 2 est représentée.

La citerne 1 comprend un trou d'homme 4 ou orifice de visite associé à la paroi supérieure 3 de la cuve 2. Ce trou d'homme est pourvu d'un couvercle 5 permettant d'obturer le trou d'homme 4.

Selon la réalisation représentée sur les figures, un évent 6 de mise à l'air de la cuve 2 est associé au couvercle 5 du trou d'homme 4 disposé dans l'axe de celui-ci. Selon d'autres réalisations, l'évent 6 peut être associé directement à la paroi supérieure 3 de la cuve 2 et plusieurs évents 6 peuvent être prévus.

L'évent 6 comprend une partie sensiblement cylindrique 7 mettant en communication l'intérieur et l'extérieur de la cuve 2 afin de permettre la mise à l'air du contenu de la cuve 2. La partie cylindrique 7 s'étend donc vers l'extérieur et vers l'intérieur de la cuve 2. L'évent comprend en outre une partie sensiblement tronconique 8 s'étendant à partir de la partie cylindrique 7 vers l'intérieur de la cuve 2. La petite base de la partie tronconique 8 est solidaire de la partie cylindrique 7 et présente un diamètre sensiblement égal au diamètre de la partie cylindrique 7. La grande base de la partie tronconique 8, présentant un diamètre supérieur à celui de la petite base, est disposée sous la petite base et débouche vers l'intérieur de la cuve 2.

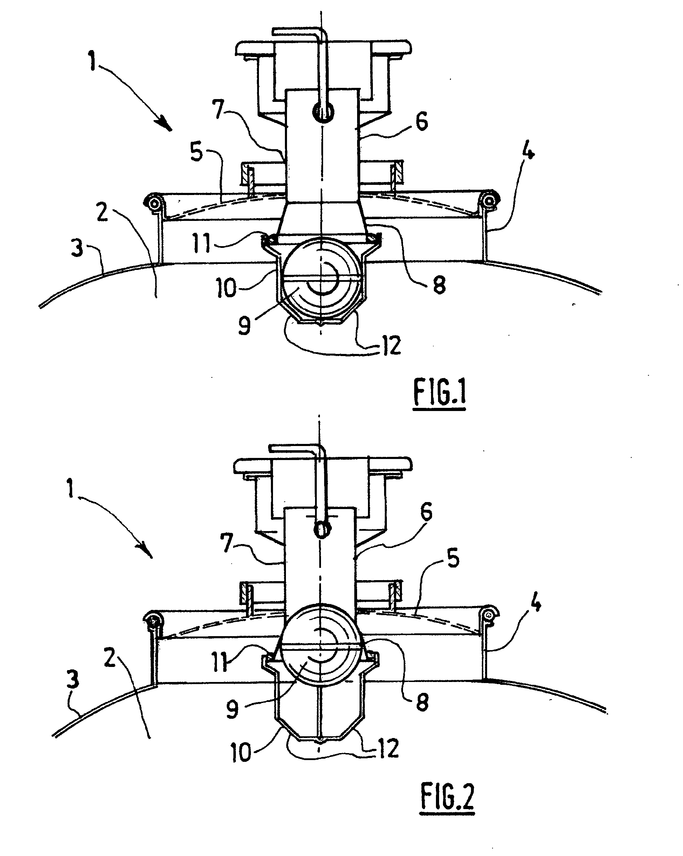

La citerne comprend un élément d'obturation 9 apte à flotter sur le produit contenu dans la cuve 2. Cet élément 9 est donc déplaçable par le produit contenu dans la cuve 2. Ainsi, l'élément d'obturation 9 est agencé pour être mobile entre une position de mise à l'air (figure 1) dans laquelle l'élément d'obturation 9 est éloigné de l'évent 6 de sorte à permettre la communication entre l'intérieur et l'extérieur de la cuve 2 lorsque le niveau du produit transporté par la cuve 2 est inférieur à un niveau prédéterminé et une position d'obturation (figure 2), dans laquelle l'élément d'obturation 9 obture l'évent 6 de sorte à empêcher la communication entre l'intérieur et l'extérieur de la cuve 2 lorsque le produit transporté dépasse ledit niveau prédéterminé. Par dépassement du niveau prédéterminé, on entend un dépassement local à proximité de l'évent 6 et notamment de la grande base de la partie tronconique 8 de celui-ci. Ainsi, lors d'un coup de frein ou d'une conduite brusque qui pourrait amener le produit transporté par la cuve 2 à déborder de l'évent 6, on assure que l'évent 6 est bouché par l'élément d'obturation 9.

L'élément d'obturation 9 est par exemple une boule de diamètre compris entre le diamètre de la petite base et le diamètre de la grande base de la partie tronconique 8 de l'évent 6.

L'élément d'obturation 9 est réalisé dans un matériau apte à flotter sur le produit contenu dans la cuve 2. A cet effet, l'élément d'obturation 9 peut être réalisé en inox. Selon une réalisation, il est constitué par deux demi-sphères assemblées par soudure étanche.

Selon la réalisation représentée sur les figures, la citerne 1 comprend en outre un logement 10 s'étendant à partir de l'évent 6 vers l'intérieur de la cuve 2. Le logement 10 est agencé pour que le produit transporté par la cuve 2 puisse le traverser. L'élément d'obturation 9 est retenu dans le logement 10 et est déplaçable entre sa position de mise à l'air et sa position d'obturation à l'intérieur dudit logement 10. Le logement 10 est solidaire de la grande base de la partie tronconique 8 de l'évent 6. Il est par exemple fixé à celui-ci par des moyens de fixation réversibles 11 permettant son démontage et l'accès à l'élément d'obturation 9 pour des opérations de nettoyage par exemple. Le logement 10 est par exemple une cage en inox constituée par deux ressorts 12 associés l'un à l'autre.

## Revendications

1. Citerne métallique destinée au transport de produits liquides ou semi-liquides, ladite citerne comprenant une cuve (2) et au moins un évent de mise à l'air (6) du contenu de ladite cuve, ledit évent étant disposé dans la partie supérieure de ladite cuve et mettant en communication l'intérieur et l'extérieur de la cuve (2), ladite citerne étant **caractérisé en ce qu'**elle comprend un élément d'obturation (9) apte à flotter sur le produit transporté dans la cuve (2), ledit élément d'obturation étant déplaçable par ledit produit entre une position de mise à l'air dans laquelle l'élément d'obturation (9) est éloigné de l'évent (6) de sorte à permettre la communication entre l'intérieur et l'extérieur de la cuve (2) lorsque le niveau du produit transporté par la cuve est inférieur à un niveau prédéterminé et une position d'obturation dans laquelle l'élément d'obturation (9) obture l'évent (6) de sorte à empêcher la communication entre l'intérieur et l'extérieur de la cuve (2) lorsque le produit transporté dépasse ledit niveau prédéterminé.

2. Citerne selon la revendication 1, **caractérisé en ce qu'**elle comprend un logement (10) s'étendant à partir de l'évent (6) vers l'intérieur de la cuve (2), ledit logement étant agencé pour que le produit transporté par la cuve puisse le traverser, l'élément d'obturation (9) étant retenu dans ledit logement et étant déplaçable entre sa position de mise à l'air et sa position d'obturation à l'intérieur dudit logement.

3. Citerne selon la revendication 2, **caractérisé en ce que** l'évent (6) comprend une partie sensiblement cylindrique (7) s'étendant entre l'intérieur et l'extérieur de la cuve et une partie sensiblement tronconique (8) s'étendant à partir de la partie cylindrique (7) vers l'intérieur de la cuve (2), la petite base de ladite partie tronconique étant solidaire de la partie cylindrique (7) et présentant un diamètre sensiblement égal au diamètre de la partie cylindrique (7) et la grande base de ladite partie tronconique étant solidaire du logement (10).

4. Citerne selon la revendication 3, **caractérisé en ce que** l'élément d'obturation (9) est une boule de diamètre compris entre le diamètre de la petite base et le diamètre de la grande base de la partie tronconique (8) de l'évent (6).

5. Citerne selon la revendication 4, **caractérisé en ce que** l'élément d'obturation (9) est réalisé en inox et est constitué par deux demi-sphères assemblées par soudure étanche.

6. Citerne selon l'une quelconque des revendications 2 à 5, **caractérisé en ce que** le logement (10) est une cage en inox constituée par deux ressorts (12) associés l'un à l'autre.

7. Citerne selon l'une quelconque des revendications 1 à 6, **caractérisé en ce qu'**elle comprend un trou d'homme (4) associé à la partie supérieure de la citerne, l'évent (6) étant associé au couvercle (5) dudit trou d'homme et étant disposé dans l'axe de celui-ci.
